# EUROPEAN PATENT APPLICATION

(11) **EP 0 888 021 A1**
(43) Date of publication of application: **30.12.1998**
(21) Application number: 97401471.4
(22) Date of filing: 24.06.1997
(51) Int. Cl.: H04Q 7/00, H04B 7/26, H04Q 7/38

(54) **TDMA communication system with a plurality of base stations in communication with mobile units via a radio interface comprising a dimensionable feedback channel**

(71) Applicant: MOTOROLA, INC., Schaumburg, IL 60196 (US)
(72) Inventor: Whinnett, Nicholas William, 75004 Paris (FR); Robinson, William Neil, 78860 St. Nom-la-Bretèche (FR); Boscovic, Dragan, Basingstoke, Hampshire RG24 8XF (GB)
(74) Representative: Joly, Jean-Jacques

(57) **Abstract**

A TDMA communications system (100) has a plurality of base stations (104). The base stations (104) are in communication with a mobile subscriber unit (106), via a radio interface (108). The radio interface comprises a plurality of channels which include a feedback channel. The feedback channel is dimensionable.

## Description

### Field of the Invention

The present invention relates to a communications system capable of communicating over a plurality of channels, for example a Code Division Multiple Access (CDMA) system or a Time Division Multiple Access (TDMA) system.

### Background of the Invention

Two key requirements of ETSI (European Telecommunications Standards Institute) for a Universal Mobile Telecommunications System (UMTS) are: adaptivity of the system, and the ability for an operator/service provider to have more control over the system configuration. A known dual-mode (TDMA/CDMA) proposal to meet this requirement employs link adaptivity and fast Dynamic Channel Allocation (DCA). These are envisioned to operate on a frame by frame basis.

Link adaptation relates to the ability of the system to adjust transmitter parameters in response to environmental conditions and the service requirements, for example, power, modulation, coding and interleaving. Link adaptation can also include the adjustment of system resources according to the changing demands of a variable rate service, for example, the assignment of more time slots in a TDMA system.

Such types of transmitter adjustment require information feedback from the receiver. In order to get maximum benefit from such feedback, it is necessary to have a low delay feedback scheme to enable a fast response to changes in the propagation or interference environment.

An example of a known feedback scheme is a system having adaptive antenna arrays at a base station. In a transmission mode of such a system, it is proposed that a mobile unit measures the response, for example, amplitude and phase of each antenna in the array of each base station and sends this information back to the base station transmitter. This allows the base station transmitter to determine the transmitter weighting towards the user.

In considering link adaptation, the choice of adaptation scheme (or even whether or not to adapt) depends on many factors. Examples of such factors are: the technical capabilities of a user terminal, such as, power, linearity, or number of antennas; the technical characteristics of the base station infrastructure, such as, the use of antenna arrays; the type of multiple access, such as, different power control requirements and the possibility to change modulation; environmental characteristics and propagation conditions; the user speed (the benefits of adaptivity can vary with speed); the operator preferences, such as, to offer different quality vs. cost (which can be implemented via link adaptation); the type of service, such as, bandwidth on demand or constant bit rate; and the frequency of adaptation needed.

Fast DCA is the adaptive assignment of channels based on the information received relating to quality of the link from quality reports. Maximum benefit from such a scheme results if the quality reports have a low delay, i.e. a quick response time, so that the system can respond to fast changes in propagation or interference. In a W-TDMA (Wideband-Time Division Multiple Access) system, a limited number of carriers is available per cell which means that limited advantage can be taken of traditional frequency hopping. In order to alleviate such a problem, intelligent adaptive frequency assignment should be employed as is described in GB-A-2 288 949; the use of such a scheme would be more efficient if fast DCA with a quick response time is implemented.

The above described systems have a fixed system design, and so to allow all conceivable information to be fed back with low delay requires a large overhead, for example capacity, which in many cases, would not even be used, Therefore, the efficiency of the system would be reduced. Also, a fixed design would not provide future-proofing of a standard, i.e. the ability to introduce new features or technologies into a deployed system. Instead, a flexible framework is required in which adaptation can be implemented according to the technology deployed, the operational environment and the operator preferences, thereby avoiding the problem of predefining bits for functions not used.

In the above described known proposal relating to link adaptation, no indication has been provided as to how the above mentioned issues are being addressed.

In the CDMA mode of the above proposal, the concept of frame by frame variable spreading is proposed with the type of spreading indicated in a control channel (the physical control channel) sent in parallel to the information channel. This proposal does not consider using this control channel to implement other adaptive schemes and does not consider the related problems described above.

### Summary of the Invention

According to the present invention, there is provided a communications system comprising a base station and a user terminal arranged to communicate over a plurality of channels, at least one of the plurality of channels including a feedback component, wherein the feedback component is dimensionable.

According to the present invention, there is also provided, a method of communicating between a base station and a user terminal over a plurality of channels, comprising the steps of providing a feedback component for at least one of the plurality of channels for communicating between the base station and the user terminal, and dimensioning the feedback component.

It is thus possible to provide a system capable of feeding back information with low delay and capable of adapting to future-proofing of a standard, thereby increasing the efficiency and flexibility of the system.

Other, preferred, features and advantages are set forth, and will become apparent from, the depondent claims and the following description.

### Brief Description of the Drawings

The invention will now be described in more detail, by way of example, with reference to the accompanying drawings, in which:
FIG. 1 is a schematic diagram of a part of a communications system;
FIG. 2 is a schematic diagram of fields in a channel constituting an embodiment of the invention;
FIG. 3 is a table of commands for use with the fields of FIG. 2;
FIG. 4 is a flow diagram of a method for use with the system, fields and commands of FIGs. 1, 2 and 3, and
FIG. 5 is a schematic diagram showing channels constituting an embodiment of the invention.

### Description of a Preferred Embodiment

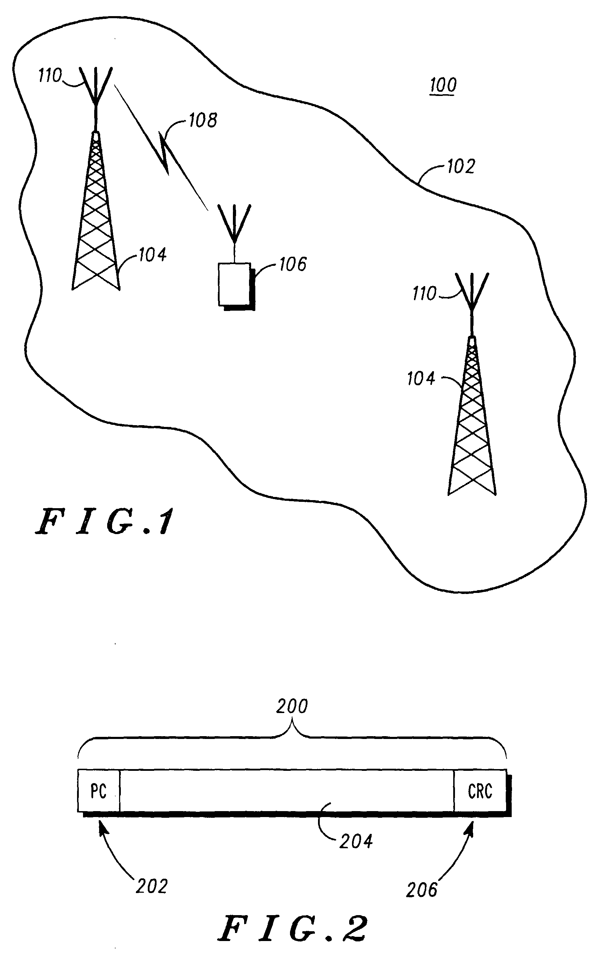

In a TDMA communications system 100 (FIG. 1), a user terminal 106 is located within a geographical area 102 and is in communications with a base station 104 via a radio interface 108. The base station 104 has a predetermined number of antennas 110.

The user terminal 106 and the base stations 104, the construction and architecture of which are well known in the art, shall not be described further.

Although a TDMA system has been described above, it is not intended that the present invention be limited only to applications in such a system; the invention can be employed in other systems, for example a CDMA system.

Referring to FIG. 5, the radio interface 108 comprises physical channels 500, for example, frequency channels, time slots or codes. The physical channels are further sub-divided into components or logical channels 502, 504, 506, such as for transmitting and receiving: a service 502, control information (control channel) 504. The logical channels further include a Logical Feedback Channel (LFC) 506 comprising a feedback component. The LFC 506 is associated with the user terminal 106. A separate LFC is provided for each user terminal active in the system. Although the LFC 506 has been described as a separate logical channel, it is conceivable to incorporate the LFC 506 as a component of an existing logical channel, for example, the control channel 504.

The type of information contained in the LFC 506 can be notionally divided into two classes: those requiring transmission periodically, for example, power control in CDMA systems, and those requiring transmission on a "need basis", for example, a command to increase the number of modulation levels, change coding and interleaving schemes, and adaptive antenna weighting.

The information in the LFC 506 is transmitted as a data frame and is subdivided in order to convey the above two classes of information. Additional bits, for error detection or correction, are also present in the data frame.

The data frame 200 (FIG. 2) comprises a periodic field 202 dedicated to conveying information of a periodic nature (i.e. the information falling into the first of the above described two classes), for example, power control (PC) information. The data frame 200 also comprises a dynamic field 204 for conveying information of an event-driven or "need" nature (i.e. the information falling into the second of the above described two classes), for example, a command to increase the order of modulation. For error detection or correction purposes, a Cyclic Redundancy Check (CRC) field 206 is also provided within the data frame 200. The above described fields 202, 204, 206 are variable size. The data frame 200 is variable in structure, i.e. the number or lengths of fields. Thus, by virtue of these properties, the data frame 200 and so the LFC 506 can be described as dimensionable. The dimensioning of the data frame 200 for uplink communications can differ from the dimensioning of the data frame 200 for downlink communications.

The content of the data frame 200 is dependent upon information relating to the terminal and base station characteristics, propagation conditions, system loading and system operator preferences. It is not, however, intended that the invention be limited to the above listed types of information - these are set forth for exemplary purposes only and others are envisaged.

This information relating to the terminal and base station characteristics and propagation conditions can be stored in data bases or, in the case of the base station characteristics, broadcast from the base station 104. The information can include a dimension of the base station antenna array, the number of modulation levels which can be supported by the user terminal, the types of services (and therefore types of traffic channels) supported by user terminal 106, and the delay spread category of the environment.

The information relating to operator preferences can be stored in a data base for each cell and would include information for both uplink and downlink communications, for example: the number of modulation orders to be implemented for each type of multiple access, a list of coding/interleaving options, a preferred adaptive antenna scheme (if any) as a function of access scheme and, optionally, speed. The choices made by the operator depend upon the local propagation environment.

By selecting these parameters suitably, an operator is also able to "balance" uplink and downlink operation, for example, the downlink performance can be improved by increasing the amount of feedback contained on the uplink, at the expense of degrading the capacity of the downlink. An example of such a situation is a variable asymmetric load between uplink communications and downlink communication such as when asymmetric services are used, such as Internet "browsing" (where more data is transmitted on the downlink than on the uplink). In a CDMA system, a slight, for example, 10% power increase needed on the uplink to transmit the LFC 506 can provide a gain of 4 dB or more on the downlink.

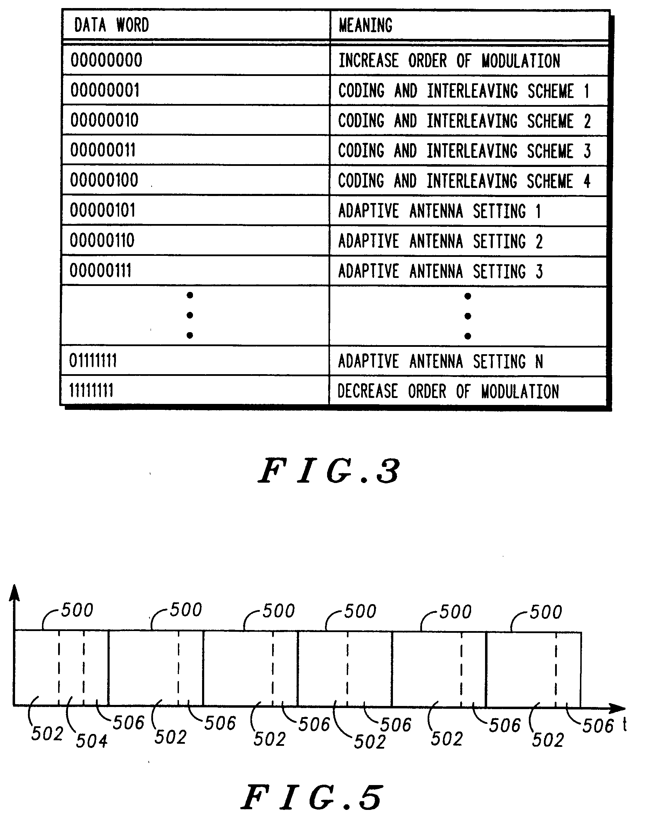

The base station within the system 100, determines the length of each of the periodic field 202, the dynamic field 204 and the CRC field 206 and therefore the required length of the data frame 200. The system, in this example, the base station 104 then forms a command table (FIG. 3) for the dynamic field 204 which is downloaded to the user terminal 106. The structure of the data frame 200 is also downloaded to the user terminal 106.

In a continuous time CDMA system, transmission of the dimensioned data frame is accommodated by any known techniques for providing variable bit rate services.

In a TDMA system or time discontinuous CDMA system, a preferred embodiment includes the mapping of the LFC to a field in one of the time slots (or physical channels) 500 used for transmission. In the known proposed dual mode system already described above, for one of the physical channels 500, there is a 684 bit payload for non-spread data bursts; it is possible to reserve 20 bits of this payload for the LFC 506 with only 3 % overhead, with the possibility of gains well in excess of 5 dB due to adaptive modulation or adaptive antennas. For other types of physical channel (for example, for different services), there are 122 or 144 bits of payload and a smaller LFC might be preferred.

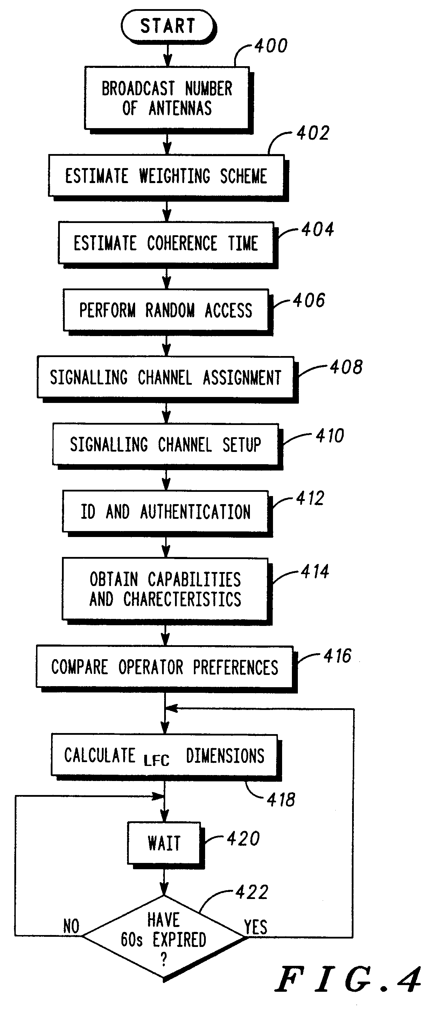

Operation of the invention will now be described with reference to FIG. 4. It is conceivable to dimension the dynamic field 204 upon registration, call setup or handover between base stations 104.

During registration, the system 100 broadcasts to the user terminal 106, from a cell, the number of base station antennas, nant_{base} (step 400). The user terminal then estimates a weighting scheme for the base station antennas according to any known method in the art (step 402). The user terminal 106 estimates the coherence time t_{coh} relating to the propagation environment (due to fading and interference) (Step 404) and performs a random access using default settings of power, modulation and coding; the access can include information relating to the adaptive antenna weight vector setting to be used for transmissions from the base station (step 406).

The base station 104 responds by assigning a signalling channel, using default modulation, coding and power (step 408). and the signalling channel is set-up (step 410) according to a method known in the art with default modulation and coding adaptation parameters, but with adaptive arrays activated.

Identification and authentication processes are performed according to any technique known in the art (step 412). The base station 104 then obtains capability and characteristics information of the user terminal 106 (step 414). Such information can either be obtained by data base lookup for terminals of a pre-arranged type, or sent by the user terminal 106 (in the case of a roaming user terminal). The information can include the number of modulation levels supported nlevs_{mob}, the number of transmitting antennas nant_{mob}, the set of traffic channels which can be used {TCH_{type}} (depending upon terminal type), and the measured coherence time range t_{coh}.

For each traffic channel type (as determined above) in the uplink direction, the base station controller: compares (step 416) the operator preferences with mobile characteristics and selects the parameters as appropriate. These parameters are the number of modulation levels, nlevs= min(nlevs_{mob},nlevs_{prcf}) and an adaptive antenna scheme, found from a lookup table based having the nant_{mob} and t_{coh} as parameters.

The system then calculates (step 418) the dimensions and structure of the LFC 506 for the downlink, dim_LFC_{DL}(TCH_{type}), from a further lookup table having nlevs, the adaptive_antenna_scheme, and t_{coh} as parameters.

The system then waits for a predetermined period of time (step 420), for example, 60 seconds and, when this period expires, the system recalculates dim_LFC_{DL}.

A similar process is employed to dimension the LFC for the uplink, dim_LFC_{UL}. It should be understood that a separate command table and structure information are formed by the base station 104 and downloaded to the user terminal 106 for the uplink LFC 506.

In an alternative embodiment, the structure and/or dimension of the LFC for the downlink for a particular terminal can be predetermined and stored in the terminal or infrastructure. The structure and/or dimension can be as a function of service type. Similarly, the structure or dimensioning of the LFC for the uplink can be predetermined and broadcast from the cell.

Although the operator is no longer free to configure the system according to their preferences, this procedure is advantageous in that the set-up is simplified.

## Claims

1. A communications system comprising a base station and a user terminal arranged to communicate over a plurality of channels, at least one of the plurality of channels including a feedback component, wherein the feedback component is dimensionable.

2. A communications system as claimed in Claim 1, wherein the feedback component is associated to the user terminal.

3. A communications system as claimed in any one of the preceding claims, wherein the user terminal has an associated terminal characteristic and the feedback component is dimensioned in response to the associated terminal characteristic.

4. A communications system as claimed in any one of the preceding claims, wherein the base station has an associated base station characteristic and the feedback component is dimensioned in response to the associated base station characteristic.

5. A communications system as claimed in any one of the preceding claims, further comprising an associated propagation condition, the feedback component being dimensioned in response to the associated propagation condition.

6. A communications system as claimed in any one of the preceding claims, further comprising a stored network operator preference, the feedback component being dimensioned in response to the stored network operator preference.

7. A communications system as claimed in any one of the preceding claims, further comprising an uplink and a downlink, wherein the feedback component for the uplink is dimensioned independently of the feedback component for the downlink.

8. A communications system as claimed in any one of the preceding claims, wherein the feedback component is dimensioned upon registration of the user terminal.

9. A communications system as claimed in any one of the preceding claims, wherein the feedback component is dimensioned upon establishment of a call.

10. A communications system as claimed in any one of the preceding claims, wherein the feedback component is dimensioned dynamically with time during the duration of the call.

11. A communications system as claimed in Claim 10, wherein the feedback component is dimensioned periodically.

12. A communications system as claimed in any one of the preceding claims, wherein the feedback component is dimensioned upon handover between the base station and another base station.

13. A communications system as claimed in any one of the preceding claims, wherein the feedback component is dimensioned in response to changes in traffic demand in the system.

14. A communications system as claimed in any one of the preceding claims, wherein the feedback component comprises a periodic field for conveying periodically changing information and a dynamic field for conveying event driven information.

15. A communications system as claimed in any one of the preceding claims, wherein the base station communicates parameter information and content of the feedback component.

16. A user terminal for use in the communications system as claimed in any one of the preceding claims.

17. A transmitter for use in the communications system as claimed in any one of the preceding claims.

18. A method of communicating between a base station and a user terminal over a plurality of channels, comprising the steps of providing a feedback component for at least one of the plurality of channels for communicating between the base station and the user terminal, and dimensioning the feedback component.

19. A method as claimed in Claim 18, wherein the feedback component is associated to the user terminal.

20. A method as claimed in Claim 18 or 19, wherein the user terminal has an associated terminal characteristic and comprising the step of dimensioning the feedback component in response to the associated terminal characteristic.

21. A method as claimed in any one of Claims 18 to 20, wherein the base station has an associated base station characteristic and comprising the step of dimensioning the feedback component in response to the associated base station characteristic.

22. A method as claimed in any one of Claims 18 to 21, further comprising an associated propagation condition, and comprising the step of dimensioning the feedback component in response to the associated propagation condition.

23. A method as claimed in any one of Claims 18 to 22, further comprising a stored network operator preference, and comprising the step of dimensioning the feedback component in response to the stored network operator preference.

24. A method as claimed in any one of Claims 18 to 23, further comprising an uplink and a downlink, and comprising the step of dimensioning the feedback component for the uplink independently of the feedback component for the downlink.

25. A method as claimed in any one of Claims 18 to 24, further comprising the step of dimensioning the feedback component upon registration of the user terminal.

26. A method as claimed in any one of Claims 18 to 25, further comprising the step of dimensioning the feedback component upon establishment of a call.

27. A method as claimed in any one Claims 18 to 26, further comprising the step of dimensioning the feedback component upon handover between the base station and another base station.

28. A method as claimed in any one of Claims 18 to 27, further comprising the step of dimensioning the feedback component dynamically with time during the duration of the call.

29. A method as claimed in Claim 28, further comprising the step of dimensioning the feedback component periodically.

30. A method as claimed in any one of Claims 18 to 29, further comprising the step of dimensioning the feedback component in response to changes in traffic demand in the system.

31. A method as claimed in any one of Claims 18 to 30, wherein the feedback component comprises a periodic field for conveying periodically changing information and a dynamic field for conveying event driven information.

32. A method as claimed in any one of Claims 18 to 31, further comprising the step of the base station communicating parameter information and content of the feedback component.
